# EUROPEAN PATENT APPLICATION

(11) **EP 4 365 118 A1**
(43) Date of publication of application: **08.05.2024**
(21) Application number: 22205315.9
(22) Date of filing: 03.11.2022
(51) Int. Cl.: B65G 65/23

(54) **A GOODS HOLDER ROTATION STATION AND A METHOD OF EXTRACTING GOODS FROM A GOODS HOLDER**

(71) Applicant: Autostore Technology AS, 5578 Nedre Vats (NO)
(72) Inventor: Florian, Sattler, A-8045 GRAZ (AT)
(74) Representative: Kilburn & Strode LLP

(57) **Abstract**

The invention relates to a goods holder rotation station (2) for an automated storage and retrieval system (1). The station comprises a receptacle (4) configured with an opening (6) to receive a goods holder (106) from above when the receptacle (4) is in an upright position. The receptacle (4) is arranged to rotate about a horizontal axis so as to tip one or more goods from the goods holder (106) on to a surface below.

The receptacle (4) comprises a locking device arranged to lock the goods holder (106) in position within the receptacle (4) during rotation of the receptacle.

## Description

The present invention primarily relates to a goods holder rotation station for handover of a content of a goods holder of a storage and retrieval system.

### BACKGROUND AND PRIOR ART

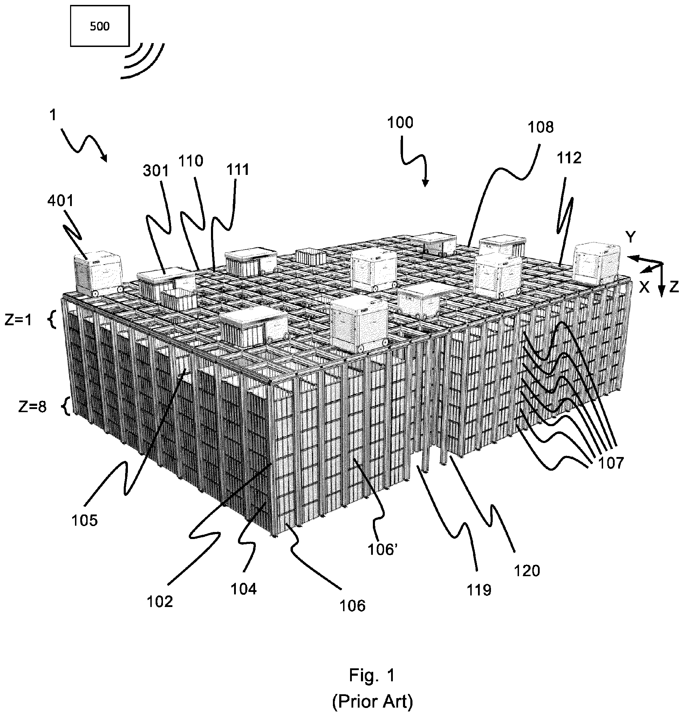

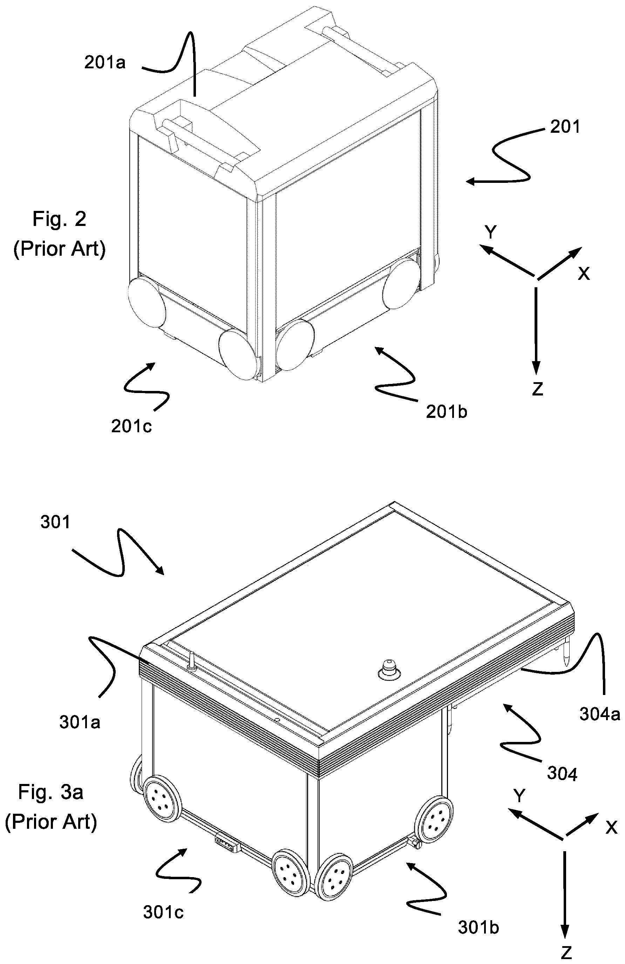

Fig. 1 discloses a prior art automated storage and retrieval system 1 with a framework structure 100 and Figs. 2, 3a-3b disclose three different prior art container handling vehicles 201, 301, 401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form container stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction X across the top of the frame structure 100, and a second set of parallel rails 111 arranged perpendicular to the first set of rails 110 to guide movement of the container handling vehicles 301, 401 in a second direction *Y* which is perpendicular to the first direction X. Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

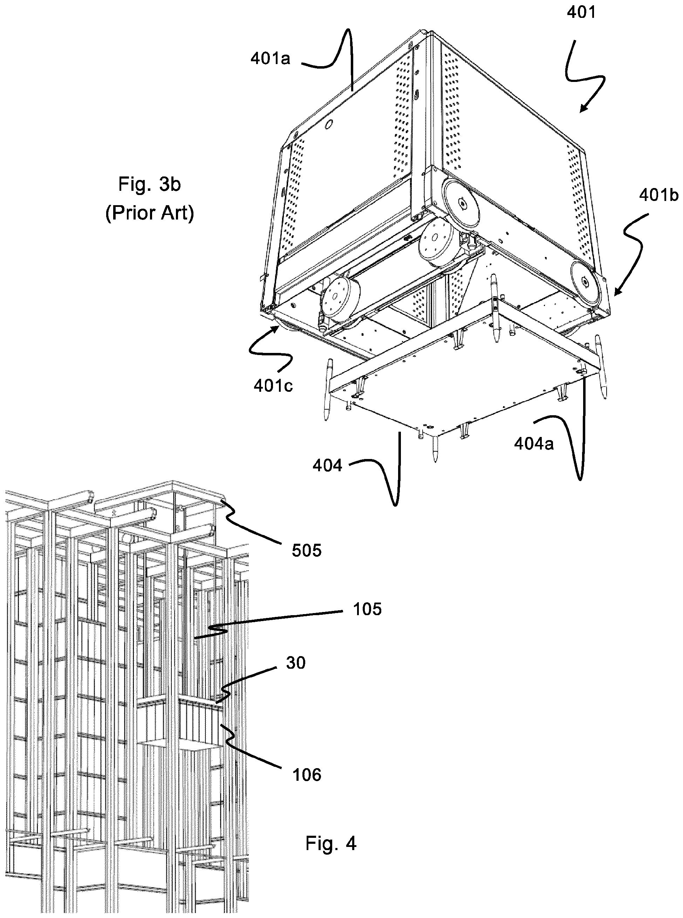

Each prior art container handling vehicle 201, 301, 401 also comprises a lifting device 304, 404 (visible in Figs. 3a-3b) having a lifting frame part 304a, 404a for vertical transportation of storage containers 106, e.g. raising a storage container 106 from, and lowering a storage container 106 into, a storage column 105. The lifting device 304, 404 comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction *Y.* Parts of the gripping device of the container handling vehicles 301, 401 are shown in Figs. 3a and 3b indicated with reference number. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1*...n* and *Y*=1...*n* identifies the position of each storage column 105 in the horizontal plane. Consequently, as an example, and using the Cartesian coordinate system X, *Y,* Z indicated in Fig. 1, the storage container identified as 106' in Fig. 1 can be said to occupy storage position *X*=*18, Y*=*1, Z=6.* The container handling vehicles 201, 301, 401 can be said to travel in layer *Z*=0, and each storage column 105 can be identified by its *X* and *Y* coordinates. Thus, the storage containers shown in Fig. 1 extending above the rail system 108 are also said to be arranged in layer Z=0.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1, the contents of which are incorporated herein by reference.

Fig. 3a shows an alternative configuration of a container handling vehicle 301 with a cantilever construction. Such a vehicle is described in detail in e.g. NO317366, the contents of which are also incorporated herein by reference.

The cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks. The rail system may also comprise a double track rail in one of the X or Y direction and a single track rail in the other of the X or Y direction. A double track rail may comprise two rail members, each with a track, which are fastened together.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different heights, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201, 301, 401 is instructed to retrieve the target storage container 106 from its position and transport it to the drop-off port column 119. This operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

In addition to above-discussed access stations, handover stations are also known in the art. In handover stations, articles stored in storage bins are removed from the automated storage and retrieval system 1 without storage bins leaving the system. In this context, AT524109 discloses a main storage system and a therewith associated handover station where stored articles are transferred from bins to totes for further transfer. The bins themselves remain within the main storage system. Accordingly, the solution is prohibitively complex as it features totes acting as intermediary storage means. In addition, the solution of AT524109 has relatively low throughput as it requires use of a picking robot or a human picker.

In view of the above it is desirable to provide a solution that solves or at least mitigates one or more of the aforementioned problems belonging to AT524109 and other prior art documents.

### SUMMARY OF THE INVENTION

The present invention is set forth and characterized in the independent claims, while the dependent claims describe other characteristics of the invention.

Accordingly, the invention relates to a goods holder rotation station for an automated storage and retrieval system, said station comprising:
- a receptacle configured with an opening to receive a goods holder from above when the receptacle is in an upright position, the receptacle being arranged to rotate about a horizontal axis so as to tip one or more goods from the goods holder on to a surface below, wherein the receptacle comprises a locking device arranged to lock the goods holder in position within the receptacle during rotation of the receptacle.

On the general level, invention in accordance with the above facilitates quick extraction of articles contained in a goods holder from the storage system shown in Fig. 1.

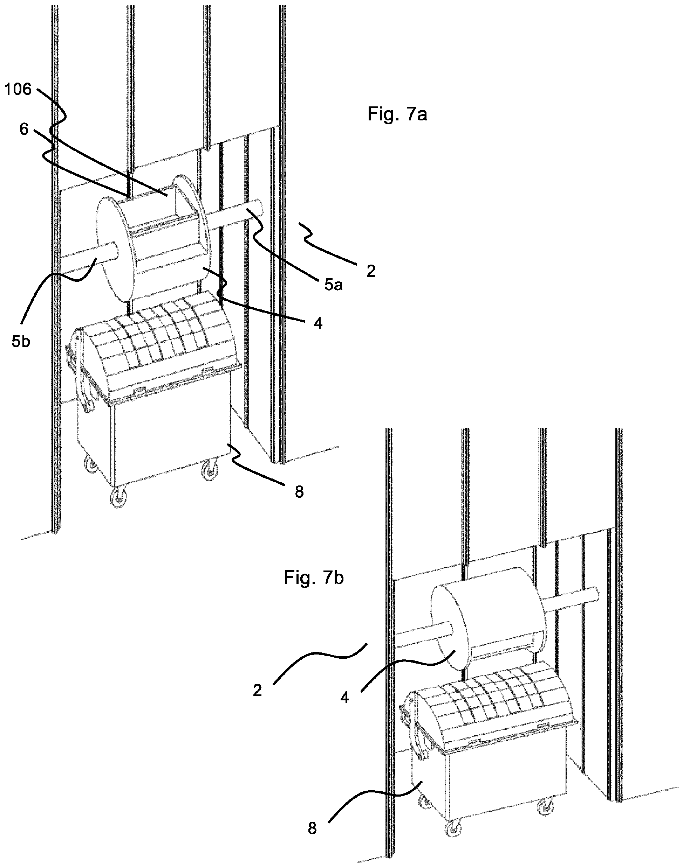

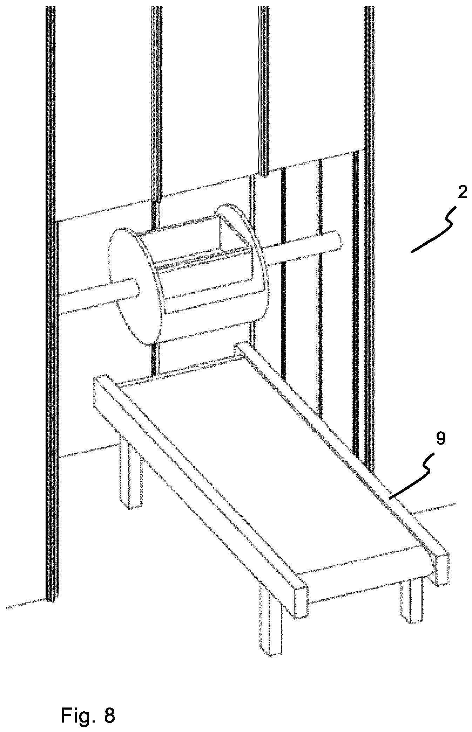

More specifically, it becomes possible to rapidly handover a finished, prepicked order (containing all ordered articles) from the goods holder to another holder, for instance suitable for handling in a conventional parcel delivery service. In a related context, it also becomes possible to efficiently extract articles in bulk by means of a handover station. Articles contained in the goods holder positioned in the handover station may be extracted into a movable article recipient such as a wheeled container (shown in Figs. 7a-7b) or poured directly onto a conveyor belt (shown in Fig. 8) for further handling outside the storage system. These advantages are achieved without any intervention by human operators such that a fully automated solution for article extraction is obtained.

For the purposes of this application, the term "container handling vehicle" used in "Background and Prior Art"-section of the application and the term "remotely operated vehicle" used in the rest of the application text are synonymous and define an autonomous wheeled vehicle operating on a rail system arranged across the top of the framework structure being part of an automated storage and retrieval system.

Analogously, the terms "storage container" and "storage bin" used in "Background and Prior Art"-section of the application and the term "goods holder" used in the rest of the application text are synonymous and define a receptacle for storing items. In a related context, the goods holder of the present application can be any one of a bin, a tote, a pallet, a tray or similar. Different types of goods holders may be used in the same automated storage and retrieval system.

Moreover, the term "lifting frame part" used in "Background and Prior Art"-section of the application and the term "gripper assembly" used in in the rest of the application text both define a device for vertical transportation of storage containers, e.g. raising a storage container from, and lowering a storage container into, a storage column.

The relative terms "upper", "lower", "below", "above", "higher" etc. shall be understood in their normal sense and as seen in a Cartesian coordinate system. When mentioned in relation to a rail system, "upper" or "above" shall be understood as a position close to the surface rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3a is a perspective view of a prior art container handling vehicle having a cantilever for carrying storage containers underneath.
Fig. 3b is a perspective view, seen from below, of a prior art container handling vehicle having an internally arranged cavity for carrying storage containers therein.
Fig. 4 is a perspective view showing a gripper assembly belonging to the state of the art in engagement with a standard goods holder.
Fig. 5 shows a perspective view of a gripper assembly similar to that of Fig 4.
Fig. 6 is a schematic top view of a standard goods holder shown in Fig. 4 with a number of items stored therein.
Fig. 7a shows an exemplary station in accordance with one embodiment of the present invention, the station having an axle connected to a receptacle, the receptacle being in a first rotational position. The station is disposed above a wheeled container.
Fig. 7b shows the station of Fig. 7a having said receptacle in a second rotational position.
Fig. 8 shows an exemplary station in accordance with another embodiment of the present invention, the station having an axle connected to a receptacle in a first rotational position. The handover station is disposed above a conveyor belt.

### DETAILED DESCRIPTION OF THE INVENTION

In the following, embodiments of the invention will be discussed in more detail, by way of example only and with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a first, upper rail system 108 in the X direction and Y direction.

The framework structure 100 further comprises storage compartments in the form of storage columns 105 provided between the members 102 where storage containers 106 are stackable in stacks 107 within the storage columns 105.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

Various embodiments of the present invention will now be discussed in more detail with reference to Figs. 4-8.

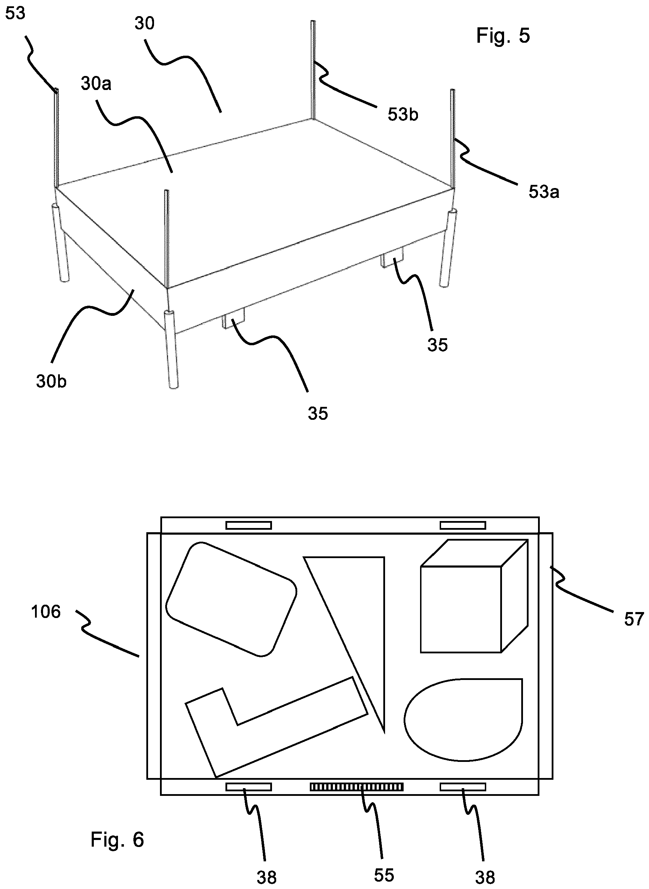

Fig. 4 is a perspective view showing a gripper assembly 30 in engagement with a goods holder 106. More specifically, a vertically displaceable gripper assembly 30 is suspended from a remotely operated vehicle 505 operating on top of upright members 102 of an automated storage and retrieval system (discussed in connection with Fig. 1). In Fig. 4, the gripper assembly 30 is in engagement with a goods holder 106 positioned in a storage column 105 defined by a set of said upright members (102; discussed in connection with Fig. 1). Functionally, the gripper assembly 30 is a part of the shown remotely operated vehicle 505. The gripper assembly 30 is suspended from the remotely operated vehicle 505 by means of lifting bands discussed in greater detail in connection with Fig. 5.

Fig. 5 shows a perspective view of an exemplary gripper assembly 30. The gripper assembly 30 may comprise a rectangularly shaped base plate 30a and a circumferentially extending rim 30b arranged at a periphery of the base plate 30a, said rim 30b being perpendicular to the base plate 30a. Furthermore, the gripper assembly 30 may comprise a pair of gripper elements 35 on each long side. These gripper elements 35 are for engagement with corresponding recesses arranged in a body of the goods holder discussed in conjunction with Fig. 6. Vertically extending guide pins 39 are provided in corners of the base plate 30a.

The gripper assembly 30 may be suspended from a remotely operated vehicle (not shown in Fig. 5) by means of lifting bands 53. One lifting band 53a may be employed to supply energy to the gripper assembly 30 and another one 53b for communication between the remotely operated vehicle and the gripper assembly 30. In another embodiment, a single lifting band both supplies energy and is used for communication. By way of example, said communication takes place over a wire-based, high-speed data bus.

Fig. 6 is a top view of a loaded goods holder 106 prior to engagement with a gripper assembly. The shown goods holder 106 has an open proximal side. Here, term "proximal" is to be construed as being nearest the gripper assembly, when the goods holder is in a storage column of Fig. 4. The particular goods holder 106 may be identified by means of a bar code 55, for example, arranged on an edge 57 delimiting said open side of the goods holder 106. In such a system comprising identifiable goods holders, the gripper assembly may comprise a device (not shown) for identifying a goods holder 106 based on the information provided in the bar code 55. Hereby, traceability of the goods holder and its content is vastly improved. Previously discussed recesses 38, for receiving gripper elements of the gripper assembly 30 of Fig. 5, are arranged in a body of the goods holder 106.

Fig. 7a shows an exemplary goods holder rotation station 2 in accordance with one embodiment of the present invention, said station 2 being disposed above a wheeled container 8.

The shown goods holder rotation station 2 is for handover of goods holders originating from an automated storage and retrieval system 1 shown in Fig. 1. Typically, the station 2 is provided within and at a periphery of the storage and retrieval system 1.

The station 2 comprises a receptacle 4 configured with an opening 6 to receive a goods holder 106 from above when the receptacle 4 is in an upright position. This is a first rotational position of the receptacle 4. As discussed in connection with Fig. 4, the goods holder 106 received is introduced from above by means of a standard remotely operated vehicle such that the receptacle 4 needs to be positioned in alignment with the access opening 112 discussed in conjunction with Fig. 1.

On the general level, the invention facilitates quick extraction of articles contained in a goods holder 106 from the system shown in Fig. 1.

More specifically, it becomes possible to rapidly handover a finished, prepicked order (containing all ordered articles) from the goods holder to another holder, for instance suitable for handling in a conventional parcel delivery service. In a related context, it also becomes possible to efficiently extract articles in bulk by means of a handover station. Articles contained in the goods holder positioned in the handover station may be extracted into a movable article recipient such as a wheeled container (shown in Figs. 7a-7b) or poured directly onto a conveyor belt (shown in Fig. 8) for further handling outside the storage system. These advantages are achieved without any intervention by human operators such that a fully automated solution for article extraction is obtained.

In one embodiment, the station 2 could further comprise a tilt sensor (not shown) for determining rotational position of the receptacle. By way of example, the tilt sensor may be in the shape of a gyroscope. More specifically, if the tilt sensor detects that the receptacle 4 has adopted an incorrect position, i.e. deviates from a strictly horizontal position, this is communicated to the remotely operated vehicle so that the lowering of the goods holder into the receptacle, by means of the remotely operated vehicle, may be discontinued. All generated data is typically processed in a processing unit located at the station. In an alternative embodiment, data is processed in the processing unit of the gripping unit and/or the remotely operated vehicle. In a related context, all communication between the station and other components such as the griping unit/the remotely operated vehicle takes place by means of communication protocols known to the person skilled in the art.

The receptacle 4 is arranged to rotate about a horizontal axis so as to tip one or more goods from the goods holder 106 on to a surface below such that the content of the goods holder 106 exits the goods holder 106 under gravitational pull.

In the shown embodiment of Fig. 7a, the surface is part of a wheeled container 8. The tipping takes place when the receptacle 4 reaches a second rotational position. Fig. 7b shows a goods holder rotation station 2 of Fig. 7a in said second rotational position. For the sake of brevity, the parts discussed above in connection with Fig. 7a are not further discussed in connection with Fig. 7b. In the shown embodiments, the angular difference between the two rotational positions is about 180 degrees.

However, other designs involving other, different angular differences may be envisaged.

With reference to Fig. 7a, the receptacle 4 is generally cylindrically shaped. In the shown embodiment, the receptacle 4 provides a central section of an axle 5. By way of example, the receptacle could be rotated by means of a lever, a gear, or a belt driving a non-driven axle. In another embodiment, the receptacle 4 may be rotated by means of a drive axle. Effectively, the axle comprises a first axle part 5a and a second axle part 5b, both fixedly connected to the receptacle 4 at one end.

The receptacle comprises a locking device (not visible in Figs. 7a-7b) arranged to lock the goods holder 106 in position within the receptacle 4 during rotation of the receptacle 4. In one embodiment, the locking device comprises a vertically movable pin for inserting in a vertically extending recess (38; shown and discussed in connection with Fig. 6) arranged at a rim section 30b of the goods holder 106. The movable pin is attached to the receptacle 4 and it is suitable for mating with said recess. In another embodiment, the locking device could comprise a horizontally extending hole arranged in a goods holder and a horizontally movable pin (not shown) for inserting in a horizontally extending hole arranged in a goods holder. In yet another embodiment (not shown), the locking device comprises a click-fit mechanism arranged at an inner bottom of the receptacle. In a further embodiment, the locking device comprises clamping means (not shown) arranged so as to clamp short sides of the goods holder against walls of the receptacle 4.

After the handover of its content, the goods holder 106, still locked in position within the receptacle 4, is returned to the first rotational position. Subsequently, the empty goods holder 106 is lifted from the receptacle 4 by means of the remotely operated vehicle (505; shown and briefly discussed in connection with Fig. 4).

Furthermore, the receptacle 4 comprises at least one sensor for determining position of the goods holder 106 relative to the receptacle 4. The sensor may comprise a hole arranged in a corner portion of the receptacle, said hole for receiving a guiding pin (39; shown and discussed in connection with Fig. 5) of the gripper assembly in engagement with the goods holder being introduced into the receptacle. The sensor further comprises a detector associated with said hole, said detector for detecting presence of the guiding pin in the hole.

Fig. 8 shows an exemplary goods holder rotation station 2 in a first rotational position and in accordance with another embodiment of the present invention. The station of Fig. 8 significantly resembles the station shown in Figs. 7a-7b. One major difference is that the station 2 of Fig. 8 is disposed above a conveyor belt 9. For the sake of brevity, the parts discussed above in connection with Figs. 7a-7b are not further discussed in connection with Fig. 8.

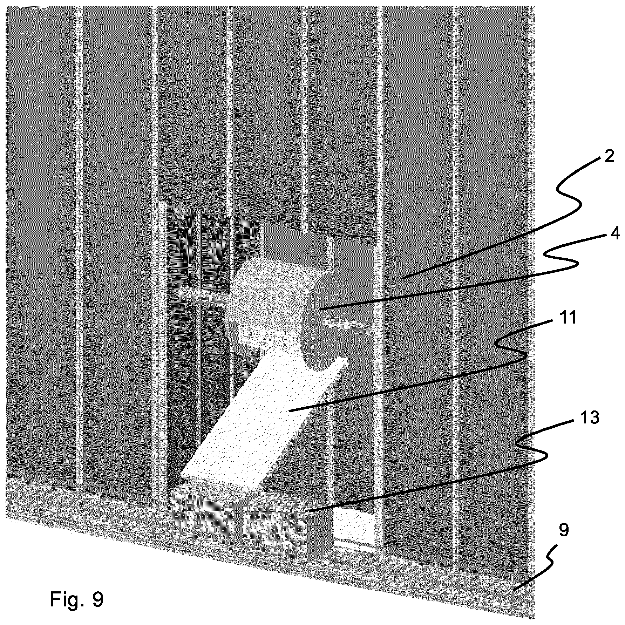

In one embodiment (shown in Fig. 9), the station comprises a guide for guiding one or more goods from the goods holder between the goods holder and a surface below. In Fig. 9, said guide is a slide 11 connecting a receptacle 4 of the goods holder rotation station 2 with an underlying box/tote/bin 13 disposed on a conveyor belt 9. For the sake of brevity, the parts and their respective function, discussed above in connection with Figs. 7a-7b and Fig. 8, are not further discussed in connection with Fig. 9.

In another, thereto-related embodiment (not shown), the guide could be funnel-shaped or be shaped so that a cross-section of said guide continuously tapers toward the surface below. The guide is normally attached to the wheeled container or to the conveyor belt positioned underneath the receptacle.

In a further embodiment, a movable hatch may be arranged at the bottom of the arbitrary guide. In this way, items originating from the receptacle may be prevented from leaving the guide by the hatch in a first, extended state. These items would reach its destination (wheeled container, conveyor belt, box/tote/bin disposed on a conveyor belt) only once the hatch adopts a second, retracted state.

In the preceding description, various aspects of the goods holder rotation station according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

### LIST OF REFERENCE NUMBERS

- 1: Storage and retrieval system
- 2: Goods holder rotation station
- 4: Receptacle
- 5a, 5b: Parts of the axle
- 6: Opening
- 8: Wheeled container
- 9: Conveyor belt
- 11: Slide
- 13: Box
- 30: Gripper assembly
- 30a: Base plate
- 30b: Rim
- 35: Gripper element
- 38: Recess
- 39: Guiding pin
- 53: Lifting bands
- 53a: Lifting band for supplying energy
- 53b: Lifting band for communication
- 55: Bar code
- 57: Edge of the goods holder
- 102: Upright members of framework structure
- 104: Storage grid
- 105: Storage column
- 106: Storage container; Goods holder
- 106': Particular position of storage container
- 107: Stack of storage containers
- 108: Rail system
- 110: Parallel rails in first direction (X)
- 111: Parallel rails in second direction (Y)
- 112: Access opening
- 119: First port column
- 201: Container handling vehicle belonging to prior art
- 201a: Vehicle body of the container handling vehicle 201
- 201b: Drive means / wheel arrangement, first direction (*X*)
- 201c: Drive means / wheel arrangement, second direction (*Y*)
- 301: Cantilever-based container handling vehicle belonging to prior art
- 301a: Vehicle body of the container handling vehicle 301
- 301b: Drive means in first direction (X)
- 301c: Drive means in second direction (*Y*)
- 401: Container handling vehicle belonging to prior art
- 401a: Vehicle body of the container handling vehicle 401
- 401b: Drive means in first direction (*X*)
- 401c: Drive means in second direction (*Y*)
- 480: Array of senders
- 490: Array of receivers
- 500: Control system
- 505: Remotely operated vehicle
- X: First direction
- Y: Second direction
- Z: Third direction

## Claims

1. A goods holder rotation station (2) for an automated storage and retrieval system (1), said station (2) comprising:
- a receptacle (4) configured with an opening (6) to receive a goods holder (106) from above when the receptacle (4) is in an upright position, the receptacle (4) being arranged to rotate about a horizontal axis so as to tip one or more goods from the goods holder (106) on to a surface below, wherein the receptacle (4) comprises a locking device arranged to lock the goods holder (106) in position within the receptacle (4) during rotation of the receptacle (4).

2. A station (2) in accordance with claim 1, wherein the receptacle (4) comprises at least one sensor for determining position of the goods holder (106) relative to the receptacle (4).

3. A station (2) in accordance with claim 2, wherein the sensor comprises a hole arranged in a corner portion of the receptacle (4), said hole for receiving a guiding pin () of a gripper assembly () in engagement with the goods holder (106) being introduced into the receptacle (4), wherein the sensor further comprises a detector associated with said hole, said detector for detecting presence of the guiding pin () in the hole.

4. A station (2) in accordance with any of the preceding claims, wherein said locking device comprises a vertically movable pin for inserting in a vertically extending recess () arranged at a rim section () of the goods holder (106).

5. A station (2) in accordance with any of the preceding claims, wherein said locking device comprises a horizontally extending hole arranged in a goods holder and a horizontally movable pin for inserting in a horizontally extending hole arranged in a goods holder (106).

6. A station (2) in accordance with any of the preceding claims, wherein said locking device comprises a click-fit mechanism arranged at an inner bottom of the receptacle (4).

7. A station (2) in accordance with any of the preceding claims, wherein said locking device comprises clamping means arranged so as to clamp short sides of the goods holder (106) against walls of the receptacle (4).

8. A station (2) in accordance with any of the preceding claims, wherein said station (2) further comprises a tilt sensor for determining rotational position of the receptacle (4).

9. A station (2) in accordance with any of the preceding claims, wherein said station (2) further comprises a guide () for guiding one or more goods from the goods holder (106) between the goods holder (106) and a surface below.

10. A station (2) in accordance with claim 9, wherein said guide () is funnel-shaped.

11. A station (2) in accordance with claim 10, wherein a cross-section of said guide () continuously tapers toward the surface below.

12. A station (2) in accordance with any of the claims 9-11, wherein said surface is part of a wheeled container (8) or a conveyor belt (9).

13. A station in accordance with claim 12, wherein said guide () is attached to the wheeled container (8) or to the conveyor belt (9).

14. A grid-based storage and retrieval system (1), said grid-based storage and retrieval system (1) comprising a framework structure (100) comprising vertically extending members (102) and a grid of horizontal rails (110, 111) provided at upper ends of said vertical members (102), wherein remotely operated vehicles for handling goods holders (106) operate on top of the grid, the framework structure (100) defining a storage volume for storing goods holders (106), the grid-based storage and retrieval system (1) comprising the goods holder rotation station (2) in accordance with any of the claims 1-13.

15. A method of extracting goods from a goods holder (106) of an automated storage and retrieval system (1), said method comprising:
- lowering a goods holder (106) into a receptacle (4) when said receptacle (4) is in an upright position,
- locking the goods holder (106) in position within the receptacle (4),
- rotating the receptacle (4) about a horizontal axis so as to tip one or more goods from the goods holder (106) on to a surface below.
